# FASCICULE DE BREVET EUROPEEN

(11) **EP 3 847 343 B1**
(45) Date de publication et mention de la délivrance du brevet: **16.08.2023**
(21) Numéro de dépôt: 19787015.7
(22) Date de dépôt: 06.09.2019
(51) Int. Cl.: F01D 17/14, F02C 6/06, F02C 9/18, F16K 49/00, F04F 5/20

(54) **DISPOSITIF DE REFROIDISSEMENT D'ORGANES DE COMMANDE SENSIBLES À LA CHALEUR D'UNE VANNE PNEUMATIQUE OU ÉLECTROPNEUMATIQUE ET VANNE ÉQUIPÉE D'UN TEL DISPOSITIF DE REFROIDISSEMENT**
VORRICHTUNG ZUM KÜHLEN VON WÄRMEEMPFINDLICHEN STEUERELEMENTEN EINES PNEUMATISCHEN ODER ELEKTROPNEUMATISCHEN VENTILS UND MIT EINER SOLCHEN KÜHLVORRICHTUNG AUSGESTATTETES VENTIL
DEVICE FOR COOLING HEAT-SENSITIVE CONTROL MEMBERS OF A PNEUMATIC OR ELECTROPNEUMATIC VALVE, AND VALVE EQUIPPED WITH SUCH A COOLING DEVICE

(30) Priorité: 06.09.2018 FR 1857986
(43) Date de publication de la demande: 14.07.2021
(73) Titulaire: Liebherr-Aerospace Toulouse SAS, 31200 Toulouse (FR)
(72) Inventeur: BRISTIEL, Frédéric, 31016 TOULOUSE Cedex 2 (FR); FAUQUE, Stéphane, 31016 TOULOUSE Cedex 2 (FR)
(74) Mandataire: Bringer IP
(86) Numéro de dépôt international: PCT/FR2019/052059
(87) Numéro de publication internationale: WO 2020/049262

(56) Documents cités:
- FR-A1- 2 979 136
- FR-A1- 2 990 492
- FR-A1- 3 028 888
- US-A1- 2017 306 846

## Description

### 1. Domaine technique de l'invention

L'invention concerne une vanne pneumatique ou électropneumatique et un dispositif de refroidissement d'organes de commande de cette vanne. L'invention concerne plus particulièrement une vanne destinée à être agencée dans un environnement moteur propulsif d'un aéronef, tel qu'une vanne de décharge d'un compresseur d'air ou une vanne de prélèvement d'air.

### 2. Arrière-plan technologique

Une vanne de prélèvement d'air sur un moteur propulsif d'un aéronef permet de prélever de l'air haute pression destiné par exemple à alimenter un système de contrôle environnemental d'une cabine de l'aéronef, plus connu sous l'acronyme anglais ECS pour *Environmental Control System.*

Une telle vanne est en général agencée dans l'environnement moteur, c'est-à-dire, dans la nacelle moteur ou au voisinage immédiat du moteur, sur les tuyaux de prélèvement d'air.

Cet environnement est soumis au cours du vol de l'aéronef à des températures élevées, qui peuvent atteindre près de 500 °C.

Il est donc nécessaire de prévoir des moyens de refroidissement des organes de commande de ces vannes de prélèvement. En effet, il est fréquent que les organes de commande de ces vannes ne puissent tenir les températures élevées qui règnent dans l'environnement moteur.

Pour pallier ces problèmes, l'une des solutions couramment mise en oeuvre actuellement est de déporter les organes de commande dans une zone de l'aéronef où les températures sont plus favorables, par exemple dans le pylône de l'aéronef, à l'extérieur de la nacelle. L'un des inconvénients de cette solution réside dans le fait qu'il est nécessaire de tirer des lignes de commande entre les organes de commande et la vanne. En outre, cette solution impose de trouver un emplacement dans une zone froide de l' aéronef et de prévoir des moyens d'ancrage de ces organes de commande dans cette zone froide.

Une autre solution connue pour les vannes compactes qui intègrent leurs organes de commande consiste à prélever un air frais sur l'écoulement secondaire du moteur, plus connu sous les dénominations de fan air, d'air fan ou de « by-pass air », produit par la soufflante du moteur et à projeter cet air prélevé sur les organes de commande de la vanne par l'intermédiaire d'un canal de ventilation.

L'un des inconvénients de cette solution est que le débit d'air est limité et déterminé par les différences de pression aux extrémités du canal de ventilation.

La même problématique se pose également pour les vannes de décharge qui permettent de décharger l'air de l'étage de compression dans l'écoulement secondaire du moteur. La température de l'air de décharge est élevée et parfois incompatible avec les organes de commande électromécaniques de cette vanne.

Aussi, il est connu de déporter les organes de commande dans une zone moins chaude de l'aéronef, ce qui génère les mêmes inconvénients que pour les vannes de prélèvement d'air.

Un dispositif de refroidissement d'organes de commande sensibles à la chaleur d'une vanne pneumatique est connu de FR 2 990 492 A1.

Les inventeurs ont donc cherché à développer une nouvelle solution permettant de refroidir les organes de commande d'une vanne pneumatique ou électropneumatique, telle qu'une vanne de décharge ou une vanne de prélèvement d'air, susceptible d'être agencée dans un environnement soumis à des températures supérieures aux températures de fonctionnement nominal des organes de commande de cette vanne.

### 3. Objectifs de l'invention

Selon la revendication 1, l'invention vise donc à fournir un dispositif de refroidissement des organes de commande sensibles à la chaleur d'une vanne pneumatique ou électropneumatique susceptible d'être agencée dans un environnement soumis à des températures supérieures aux températures de fonctionnement nominal de ces organes de commande.

L'invention vise en particulier à fournir, dans au moins un mode de réalisation, un tel dispositif permettant de conditionner le refroidissement des organes de commande à l'activation de la vanne associée.

L'invention vise également à fournir une vanne équipée d'un tel dispositif de refroidissement de ses organes de commande.

L'invention vise en particulier à fournir une vanne compacte équipée d'un tel dispositif de commande.

L'invention vise aussi à fournir, dans au moins un mode de réalisation, une vanne de décharge, du type vanne HBV (pour la dénomination anglaise de *Handling Bleed Valve*).

L'invention vise également à fournir, dans au moins un mode de réalisation, une vanne de prélèvement d'air, du type HPV (pour la dénomination anglaise de *High Pressure Valve*) ou PRV (pour la dénomination anglaise de *Pressure Regulating Valve*).

### 4. Exposé de l'invention

Pour ce faire, l'invention concerne un dispositif de refroidissement d'organes de commande sensibles à la chaleur d'une vanne pneumatique ou électropneumatique susceptible d'être agencée dans un environnement soumis à des températures supérieures aux températures de fonctionnement nominal de ces organes de commande.

Le dispositif de refroidissement selon l'invention comprend une enveloppe de confinement adaptée pour contenir lesdits organes de commande de ladite vanne ; une entrée d'air, dit air frais, dans ladite enveloppe de confinement ; une sortie d'air de ladite enveloppe de confinement équipée d'une trompe de ventilation d'air comprenant :
- une colonne d'accélération d'air mettant en communication de fluide ladite enveloppe de confinement et ladite sortie d'air ;
- une première alimentation, dite alimentation primaire, de la colonne d'accélération en un air, dit air primaire, présentant une température et pression supérieures à la température et pression de l'air frais,
- une seconde alimentation, dite alimentation secondaire, de ladite colonne d'accélération en un air, dit air secondaire, présent dans ladite enveloppe de confinement,
de sorte que ledit air primaire puisse entrainer et accélérer l'air secondaire vers ladite sortie d'air de manière à former une ventilation forcée d'air dans ladite enveloppe de confinement entre ladite entrée d'air et ladite sortie d'air.

Un dispositif de refroidissement selon l'invention permet donc de maintenir les organes de commande sensibles à la chaleur dans une enveloppe de confinement alimentée en un air frais, et à forcer la ventilation de cet air frais dans l'enveloppe de confinement par une trompe de ventilation agencée en sortie d'enveloppe de confinement. Cette trompe de ventilation forcée est configurée pour pouvoir être alimentée par un flux d'air primaire à haute énergie permettant d'entrainer un flux d'air secondaire dans ladite enveloppe de confinement elle-même alimentée par un air frais. En d'autres termes, l'air secondaire est l'air frais qui alimente l'enveloppe. Aussi, la ventilation forcée permet de forcer l'aspiration de l'air frais dans l'enveloppe de confinement, sa circulation dans l'enveloppe de confinement, et son expulsion vers la sortie d'air.

Dans tout le texte, on désigne par « organe de commande », un organe qui participe directement ou indirectement au fonctionnent de la vanne. Un tel organe peut être un organe de commande en tant que tel (par exemple, un actionneur électrique, une électrovanne, une servovalve, etc.), ou un organe de contrôle du bon fonctionnement de la vanne (par exemple un capteur de pression, un capteur de position, etc.), et d'une manière générale tout organe qui participe au fonctionnement de la vanne

Selon l'invention, une ventilation forcée est générée par une trompe de ventilation comprenant une colonne d'accélération, un primaire de trompe alimenté par un air chaud (et éventuellement sous pression), circulant par exemple dans le corps de la vanne pilotée par les organes de commande, un secondaire alimenté par un air froid, qui est par exemple l'air circulant dans un canal alimenté par la soufflante d'un moteur propulsif d'un aéronef. Le flux d'air primaire entraîne le flux d'air secondaire créant un effet de ventilation forcée. Les organes sensibles en température peuvent ainsi être refroidis par le flux d'air circulant dans l'enveloppe de confinement entre l'entrée d'air et la sortie d'air.

Selon le type de vanne (vanne de décharge d'un étage de compression ou vanne de prélèvement d'air) et selon l'agencement de cette vanne dans l'aéronef, différentes variantes de réalisation sont possibles pour alimenter la trompe de ventilation en air primaire et en air secondaire.

Un dispositif de refroidissement selon l'invention permet donc d'agencer une vanne pneumatique ou électropneumatique avec ses organes de commande dans un environnement sévère en température tout en garantissant un fonctionnement nominal des organes de commande.

Il devient donc possible avec un dispositif de refroidissement selon l'invention de supprimer les besoins de déporter les organes de commande dans les zones froides de l'aéronef et de tirer des lignes de commandes reliant ces organes et la vanne ainsi commandée.

Un dispositif selon l'invention permet donc de simplifier les architectures des vannes, notamment des vannes de décharge et de prélèvement d'air, et de limiter l'encombrement de ces dernières.

Ainsi, et selon une variante de l'invention, ladite alimentation primaire est en communication de fluide avec une chambre d'air agencée en aval d'un régulateur pneumatique de ladite vanne de manière à pouvoir assurer une ventilation forcée peu sensible aux conditions de fonctionnement de ladite vanne.

Selon cette variante avantageuse de l'invention, la trompe de ventilation forcée est alimentée en air primaire par un air issu d'une chambre d'air agencée en aval d'un régulateur pneumatique de la vanne. En d'autres termes, l'air primaire est piqué en aval du régulateur pneumatique de la vanne, ce qui permet de conférer à la trompe de ventilation des conditions de fonctionnement stable et nominal quelles que soient les conditions de vol de l'aéronef équipé d'une vanne munie d'un dispositif de refroidissement selon cette variante. En particulier, le débit d'air primaire peut alors être quasi constant et ainsi assurer une ventilation à débit quasi constant de l'enveloppe contenant les éléments sensibles à la chaleur.

Selon une autre variante de l'invention, ladite alimentation primaire est en communication de fluide avec une chambre agencée en aval d'un organe d'activation de ladite vanne d'air, du type solénoïde d'activation, de sorte que ladite ventilation forcée assurée par ladite trompe de ventilation n'est effective que lorsque ladite vanne est activée par ledit organe d'activation.

Selon cette variante avantageuse, l'alimentation de la trompe de ventilation en air primaire n'est assurée que lorsque la vanne est elle-même activée. Cela est rendu possible par l'alimentation de la colonne d'accélération avec un air issu d'une chambre d'air agencée en aval d'un organe d'activation de la vanne, du type solénoïde d'activation. En d'autres termes, lorsque le solénoïde d'activation n'est pas actif, la chambre en aval du solénoïde n'est pas alimentée en air et donc la trompe d'injection n'est pas non plus alimentée en air primaire. La trompe de ventilation ne permet donc pas dans cette configuration d'accélérer l'air secondaire. Les éléments sensibles à la chaleur bénéficient alors simplement d'un refroidissement par une ventilation naturelle de l'air circulant entre l'entrée d'air et la sortie d'air de l'enveloppe de confinement. En revanche, lorsque le solénoïde d'activation est actif, la chambre d'air en aval du solénoïde est alimentée en air primaire qui alimente à son tour la colonne d'accélération, ce qui permet de déclencher la ventilation forcée.

En d'autres termes, cette variante avantageuse permet de basculer entre une ventilation naturelle lorsque la vanne est fermée, c'est-à-dire en l'absence de circulation d'air chaud dans la vanne, et une ventilation forcée dès que la vanne est activée, ce qui permet un meilleur refroidissement des éléments sensibles à la chaleur logés dans l'enveloppe de confinement, y compris de l'organe d'activation, tel que le solénoïde, dans une phase de fonctionnement dans laquelle il est parcouru par un courant qui génère un échauffement par effet Joule.

Ce mode de réalisation avantageux permet donc de n'activer la trompe et donc de forcer la ventilation que lorsque le fonctionnement de la vanne est requis. Cette configuration permet de limiter la consommation d'air primaire. Elle est particulièrement intéressante lorsque la ventilation contribue par exemple à limiter l'auto échauffement d'un solénoïde.

Un dispositif de refroidissement d'une vanne selon l'invention équipe de préférence une vanne destinée à être agencée dans un environnement moteur, tel qu'une vanne de décharge d'air compresseur ou une vanne de prélèvement d'air destiné à alimenter un système de conditionnement d'air d'une cabine d'un aéronef. Cela étant, rien n'empêche d'équiper une vanne d'un système d'air et de manière générale toute vanne pneumatique ou électropneumatique destinée à être agencée dans un environnement soumis à des températures sévères non compatibles avec les températures de fonctionnement nominal des organes de commande de cette vanne.

L'invention concerne également une vanne pneumatique ou électropneumatique comprenant un corps de vanne comprenant une entrée d'air, une sortie d'air et un conduit de circulation d'air entre l'entrée et la sortie d'air, un obturateur monté mobile dans ledit conduit de circulation entre au moins une position ouverte dans laquelle l'air peut librement circuler de ladite entrée vers ladite sortie, et une position fermée dans laquelle l'obturateur empêche le passage d'air de l'entrée vers ladite sortie et des organes de commande dudit obturateur.

Une vanne selon l'invention est caractérisée en ce qu'elle comprend en outre un dispositif de refroidissement desdits organes de commande selon l'invention, de sorte que ladite vanne puisse être agencée dans un environnement, tel qu'un environnement moteur d'aéronef, susceptible d'être soumis à des températures supérieures aux températures de fonctionnement nominal desdits organes de commande.

Les avantages d'un dispositif de refroidissement selon l'invention s'appliquent *mutatis mutandis* à une vanne pneumatique ou électropneumatique selon l'invention.

Selon une variante de l'invention, l'alimentation primaire de ladite colonne d'accélération dudit dispositif de refroidissement est reliée audit corps de vanne, en amont ou en aval dudit obturateur, de sorte que ledit air primaire est l'air circulant dans ledit corps de vanne.

Selon une autre variante de l'invention, la vanne comprend en outre un organe de régulation pneumatique intégrée et ladite alimentation primaire de ladite colonne d'accélération dudit dispositif de refroidissement est reliée en aval dudit organe de régulation.

Selon une autre variante de l'invention, la vanne comprend un organe d'activation de la vanne, du type solénoïde d'activation, et ladite alimentation primaire de ladite colonne d'accélération dudit dispositif de refroidissement est reliée en aval dudit organe d'activation de sorte que ladite ventilation forcée n'est effective que lorsque ladite vanne est activée par ledit organe d'activation.

Selon une variante avantageuse de l'invention, ladite entrée d'air dans ladite enveloppe de confinement dudit dispositif de refroidissement est reliée à une conduite d'air alimentée en air issu d'une soufflante d'un moteur propulsif d'un aéronef.

Selon une autre variante avantageuse de l'invention, ladite alimentation secondaire dudit dispositif de refroidissement est reliée à une conduite d'air alimentée par un air issu d'un compresseur d'un moteur propulsif d'un aéronef.

Avantageusement et selon l'invention, lesdits organes de commande comprennent des organes d'origine organique tels que des enrobages, des vernis, des membranes et d'une manière générale tout organe susceptible de présenter des performances thermiques qui se dégradent avec le temps.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique fonctionnelle d'une vanne selon un mode de réalisation de l'invention équipée d'un dispositif de refroidissement selon un mode de réalisation de l'invention agencée au sein d'un système de prélèvement d'air sur un moteur propulsif d'un aéronef,
- la figure 2 est une vue schématique fonctionnelle d'une vanne selon un mode de réalisation de l'invention équipée d'un dispositif de refroidissement selon un mode de réalisation de l'invention,

- la figure 3 est une vue schématique fonctionnelle détaillée du dispositif de refroidissement de la figure 2,
- la figure 4 est une vue schématique fonctionnelle détaillée d'un dispositif de refroidissement selon un autre mode de réalisation,
- la figure 5 est une vue schématique fonctionnelle d'une vanne selon un autre mode de réalisation équipée d'un dispositif de refroidissement selon un autre mode de réalisation de l'invention.

### 6. Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément du dispositif de refroidissement est décrit tel qu'il est agencé lorsqu'il équipe une vanne selon un mode de réalisation de l'invention

En outre, les éléments identiques, similaires ou analogues sont désignés par les mêmes références dans toutes les figures.

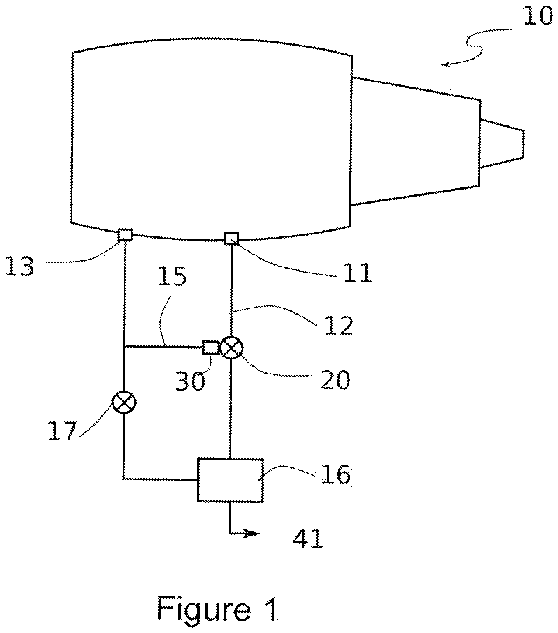

La figure 1 illustre schématiquement un système de prélèvement d'air destiné à alimenter un pack de conditionnement d'air d'une cabine d'un aéronef comprenant une vanne selon un mode de réalisation de l'invention.

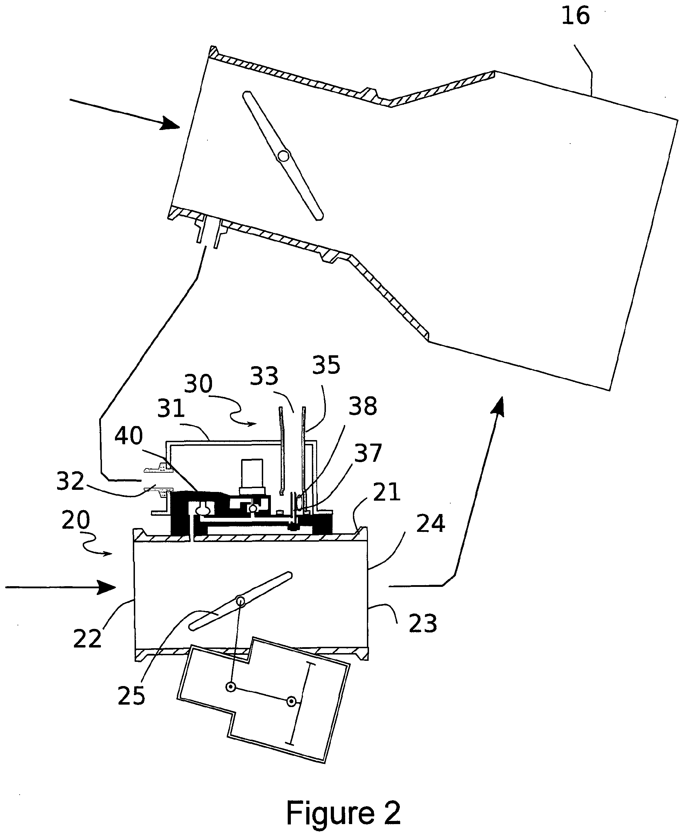

Le système de la figure 1 comprend un moteur 10 propulsif d'un aéronef comprenant un port 11 de prélèvement d'air relié par une conduite 12 à une vanne 20 de prélèvement d'air selon un mode de réalisation de l'invention, plus connue sous l'acronyme PRV pour *Pressure Regulating Valve,* elle-même reliée à un échangeur thermique 16, plus connu sous la dénomination anglaise de *precooler.* La vanne 20 de prélèvement d'air est équipée d'un dispositif de refroidissement 30 des organes de commande selon un mode de réalisation de l'invention de la vanne 20 de prélèvement d'air. Le système de prélèvement d'air comprend également un port 13 de prélèvement d'air sur l'écoulement secondaire du moteur 10, plus connu sous la dénomination d'air fan. Cet air fan circule jusqu'au *precooler* 16 par l'intermédiaire d'une vanne 17, plus connue sous l'acronyme anglais FAV pour *Fan Air Valve* pour refroidir le flux d'air chaud prélevé sur le port 11. Le flux d'air en sortie de *precooler* 16 est ensuite dirigé vers un système de conditionnement d'air 40 d'une cabine de l'aéronef. Le dispositif de refroidissement 30 est alimenté en air fan par une conduite 15. Comme décrit en lien avec les figures 2 à 5, cet air fan est ensuite accéléré par une trompe de ventilation, non représentée sur la figure 1, pour permettre le refroidissement des organes de commande de la vanne 20.

La figure 2 illustre de manière un peu plus détaillée la vanne 20 équipée du dispositif de refroidissement 30.

La vanne 20 comprend un corps de vanne 21 comprenant une entrée d'air 22, une sortie d'air 23, un conduit de circulation d'air 24 entre l'entrée et la sortie d'air, et un papillon 25 formant un obturateur monté mobile dans le conduit de circulation pour autoriser ou non le passage d'air de l'entrée d'air 22 vers la sortie d'air 23.

Cette vanne 20 est équipée d'un dispositif de refroidissement 30 des organes de commande de la vanne.

Ce dispositif comprend une enveloppe 31 de confinement adaptée pour contenir les organes de commande de la vanne 20. Cette enveloppe 31 peut être fait en tout type de matériau compatible avec l'environnement dans lequel elle est destinée à être agencée, en particulier dans un environnement moteur.

Cette enveloppe 31 délimite une enceinte 36 alimentée en air par une entrée d'air frais 32. L'enveloppe comprend également une sortie d'air 33 équipée d'une trompe 34 de ventilation d'air.

Cette trompe 34 de ventilation d'air comprend une colonne 35 d'accélération d'air mettant en communication de fluide l'enceinte 36 délimitée par l'enveloppe 31 et la sortie d'air 33.

La trompe 34 de ventilation est alimentée en air d'une part par une alimentation primaire 37 en communication de fluide avec une source d'air chaud et d'autre par une alimentation secondaire 38 en communication de fluide avec l'enceinte 36 délimitée par l'enveloppe 31.

L'air secondaire présent dans l'enveloppe 31 est l'air frais introduit dans l'enveloppe, éventuellement réchauffé au contact des organes de commande.

L'architecture du dispositif est tel que l'air primaire est plus chaud que l'air secondaire.

Aussi, l'air primaire peut entraîner et accélérer l'air secondaire vers la sortie d'air 33 de manière à former une ventilation forcée d'air dans l'enveloppe 31 de confinement entre l'entrée d'air 32 et la sortie d'air 33.

Selon le mode de réalisation de la figure 2, la source d'air frais alimentant l'entrée d'air 32 est l'air fan prélevé dans l'écoulement secondaire du moteur 10.

Selon le mode de réalisation de la figure 2, la source d'air chaud alimentant la trompe 34 de ventilation forcée est un air piqué au niveau d'une chambre d'air en aval du régulateur 40 de vanne.

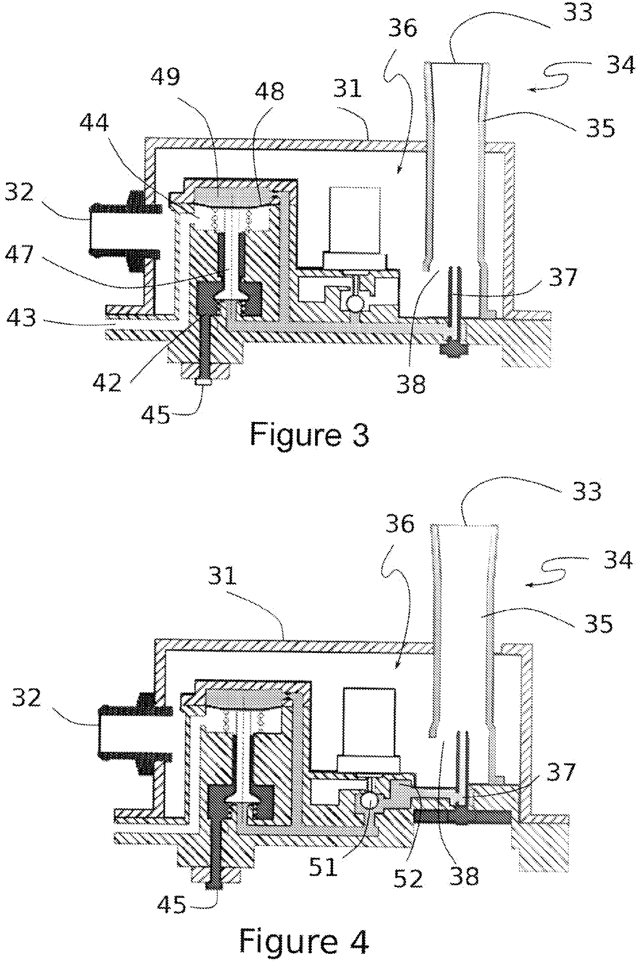

La figure 3 illustre de manière plus détaillée ce piquage d'air en aval du régulateur 40 de la vanne 20.

Le régulateur 40 comprend par exemple et tel que représenté sur la figure 3 une entrée d'air haute pression 41 qui est l'air chaud circulant en aval de l'obturateur 25 de la vanne et qui alimente une première chambre 42 du régulateur. Le régulateur comprend également une entrée 43 d'un fluide de commande alimentant une deuxième chambre 44 de pression. En outre, le régulateur comprend un organe 47 mobile sous l'effet de la pression de l'air chaud et du fluide de commande. Cet organe 47 de commande est configuré pour pouvoir agir sur une membrane 48 qui délimite une chambre de pression 49 reliée à l'alimentation primaire 37 de la trompe 34.

Les expériences menées par les inventeurs démontrent que pour une trompe équipée d'un injecteur de 2 mm, alimentée par un air secondaire prenant de l'air de fan et implémentée en aval d'un régulateur taré à 49 psig, les gains de ventilation sont compris entre 4 et 38% par rapport à une ventilation naturelle (estimée à partir d'un injecteur de 0 mm).

Selon un autre mode de réalisation tel que représenté sur la figure 4, l'alimentation primaire 37 de la trompe 34 est reliée à une chambre 52 en aval d'un solénoïde 51 de commande. Ainsi, la trompe 34 est alimentée en air primaire uniquement lorsque la vanne est active.

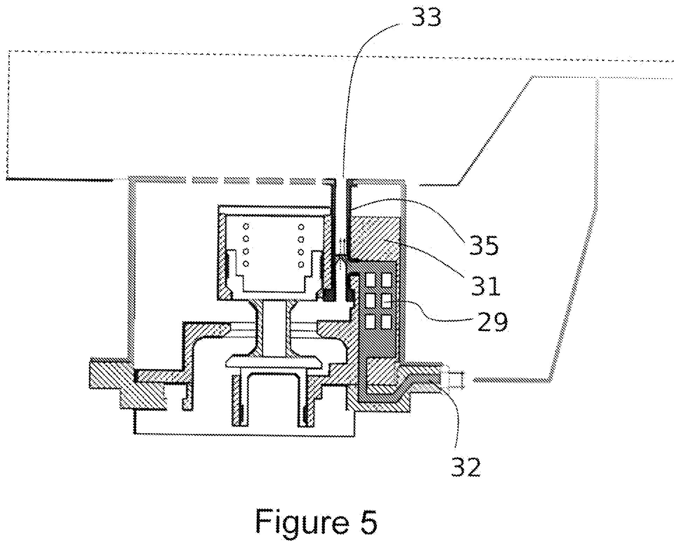

La figure 5 illustre une vanne selon un autre mode de réalisation sous la forme d'une vanne de décharge d'air compresseur.

Cette vanne comprend des organes de commande 29 logés dans l'enveloppe 31. L'enveloppe 31 est alimentée en air frais prélevé sur l'écoulement secondaire. La sortie d'air 33 de l'enveloppe débouche dans l'écoulement secondaire. L'alimentation en air primaire de la colonne 35 d'accélération est reliée directement à une chambre en aval de l'obturateur de la vanne. Ainsi, l'alimentation n'est effective que lorsque la vanne de décharge est ouverte et alimentée par l'air chaud issu du compresseur.

En d'autres termes, dans le cas de la vanne de décharge moteur illustré sur la figure 5, l'alimentation en air froid se fait par effet de trompe en utilisant sur le circuit primaire de la trompe la pression déchargée par la vanne en position ouverte et sur le circuit secondaire l'air froid prélevé sur l'écoulement secondaire. Cela permet donc de forcer la ventilation lorsque l'apport de calories est le plus fort, c'est-à-dire lorsque la vanne est ouverte.

Sur la figure 5, l'alimentation de la chambre de l'actionneur de la vanne de décharge n'est pas représentée à des fins de clarté.

Si l'organe de contrôle est positionné à l'extérieur du conduit de décharge de la vanne, on obtient une ventilation dédiée, active qu'en cas d'ouverture de la vanne.

Si l'organe de contrôle est positionné à l'intérieur du conduit de décharge de la vanne, la situation est similaire mais en plus avec une recirculation de l'air dans l'écoulement secondaire. De plus, la localisation interne au conduit de décharge permet éventuellement de bénéficier d'une ventilation naturelle (à débit moindre que lorsque la trompe est activée) si le piquage de ventilation dans l'écoulement secondaire permet de récupérer de la pression dynamique.

Une autre variante consiste à avoir une ventilation forcée permanente par alimentation du primaire de la trompe quel que soit l'état de la vanne de décharge. Cela implique alors un prélèvement permanent sur l'étage de compression.

L'implémentation d'une trompe alimentée en secondaire par l'air de l'écoulement secondaire permet donc une ventilation intégrée des composants sensibles embarqués sur la vanne de décharge.

Les expérimentations menées par les inventeurs ont permis de démontrer que pour une pression d'air primaire de l'ordre de 20 bar, une pression de l'air secondaire de l'ordre de 1.5 bar, un injecteur de 1 mm, les gains en ventilation d'un dispositif selon l'invention sont de l'ordre de 6 g/s d'air frais dans une conduite de 5 mm.

L'invention est principalement destinée à refroidir des éléments sensibles à la chaleur associés à une vanne pneumatique ou électropneumatique destinée à être installée dans un environnement moteur. Cela étant, un dispositif conforme à l'invention pourrait également être utilisé comme moyen de réchauffage modéré en mélangeant le flux primaire très chaud et le flux secondaire froid mis en oeuvre dans un dispositif selon l'invention.

## Revendications

1. Dispositif (30) de refroidissement d'organes de commande (29) sensibles à la chaleur d'une vanne (20) pneumatique ou électropneumatique susceptible d'être agencée dans un environnement soumis à des températures supérieures aux températures de fonctionnement nominal de ces organes de commande, le dispositif de refroidissement comprenant :
- une enveloppe (31) de confinement adaptée pour contenir lesdits organes (29) de commande de ladite vanne pneumatique, **caractérisé en ce que** le dispositif de refroidissement comprend en outre:
- une entrée d'air (32), dit air frais, dans ladite enveloppe (31) de confinement, et
- une sortie d'air (33) de ladite enveloppe de confinement équipée d'une trompe (34) de ventilation d'air comprenant :
o une colonne (35) d'accélération d'air mettant en communication de fluide ladite enveloppe (31) de confinement et ladite sortie d'air (33);
o une première alimentation, dite alimentation primaire (37), de la colonne (35) d'accélération en un air, dit air primaire, présentant une température et pression supérieures à la température et pression de l'air frais, et
o une seconde alimentation, dite alimentation secondaire (38), de ladite colonne (35) d'accélération en un air, dit air secondaire, présent dans ladite enveloppe (31) de confinement,
de sorte que ledit air primaire puisse entrainer et accélérer l'air secondaire vers ladite sortie d'air de manière à former une ventilation forcée d'air dans ladite enveloppe (31) de confinement entre ladite entrée d'air (32) et ladite sortie d'air (33).

2. Dispositif de refroidissement selon la revendication 1, **caractérisé en ce que** ladite alimentation primaire est configurée pour être en communication de fluide avec une chambre (49) d'air agencée en aval d'un régulateur (40) pneumatique de ladite vanne (20) de manière à assurer une ventilation forcée peu sensible aux conditions de fonctionnement de ladite vanne (20).

3. Dispositif de refroidissement selon la revendication 1, **caractérisé en ce que** ladite alimentation primaire est configurée pour être en communication de fluide avec une chambre (52) agencée en aval d'un organe (51) d'activation de ladite vanne d'air, du type solénoïde d'activation, de sorte que ladite ventilation forcée assurée par ladite trompe (34) de ventilation n'est effective que lorsque ladite vanne (20) est activée par ledit organe (51) d'activation.

4. Vanne (20) pneumatique ou électropneumatique comprenant un corps (21) de vanne comprenant une entrée d'air (22), une sortie d'air (23) et un conduit (24) de circulation d'air entre l'entrée (22) et la sortie d'air (23), un obturateur (25) monté mobile dans ledit conduit (24) de circulation entre au moins une position ouverte dans laquelle l'air peut librement circuler de ladite entrée (22) vers ladite sortie (23), et une position fermée dans laquelle l'obturateur (25) empêche le passage d'air de l'entrée (22) vers ladite sortie (23), des organes de commande dudit obturateur, **caractérisée en ce qu'**elle comprend en outre un dispositif (30) de refroidissement desdits organes de commande selon l'une des revendications 1 à 3 de sorte que ladite vanne puisse être agencée dans un environnement, tel qu'un environnement moteur d'aéronef, susceptible d'être soumis à des températures supérieures aux températures de fonctionnement nominal des dits organes de commande.

5. Vanne selon la revendication 4, **caractérisée en ce que** ladite alimentation primaire de ladite colonne (35) d'accélération dudit dispositif (30) de refroidissement est reliée audit conduit (24) de circulation d'air de la vanne, en amont ou en aval dudit obturateur (25), de sorte que ledit air primaire est l'air circulant dans ledit corps de vanne.

6. Vanne selon la revendication 4, **caractérisée en ce qu'**elle comprend en outre un organe (40) de régulation pneumatique intégrée et **en ce que** ladite alimentation primaire de ladite colonne (35) d'accélération dudit dispositif (30) de refroidissement est reliée en aval dudit organe (40) de régulation.

7. Vanne selon la revendication 4, **caractérisée en ce qu'**elle comprend un organe (51) d'activation de la vanne, du type solénoïde d'activation, et **en ce que** ladite alimentation primaire de ladite colonne (35) d'accélération dudit dispositif (30) de refroidissement est reliée en aval dudit organe (51) d'activation de sorte que ladite ventilation forcée n'est effective que lorsque ladite vanne est activée par ledit organe d'activation.

8. Vanne selon l'une des revendications 5 à 7, **caractérisée en ce que** ladite entrée d'air (32) dans ladite enveloppe (31) de confinement dudit dispositif de refroidissement est reliée à une conduite d'air alimentée en air issu d'une soufflante d'un moteur propulsif d'un aéronef.

9. Vanne selon l'une des revendications 5 à 8, **caractérisée en ce que** ladite alimentation secondaire dudit dispositif (30) de refroidissement est reliée à une conduite d'air alimentée par un air issu d'un compresseur d'un moteur propulsif d'un aéronef.

10. Vanne selon l'une des revendications 5 à 9, **caractérisée en ce que** lesdits organes (29) de commande comprennent des organes d'origine organique tels que des enrobages, des vernis, des membranes et d'une manière générale tout organe susceptible de présenter des performances thermiques qui se dégradent avec le temps.

## Patentansprüche

1. Vorrichtung (30) zum Kühlen wärmeempfindlicher Steuerelemente (29) eines pneumatischen oder elektropneumatischen Ventils (20), das in einer Umgebung angeordnet werden kann, die Temperaturen oberhalb der Nennbetriebstemperaturen dieser Steuerelemente ausgesetzt ist, wobei die Kühlvorrichtung umfasst:
ein Gehäuse (31), das angepasst ist, die Steuerelemente (29) des pneumatischen Ventils aufzunehmen, **dadurch gekennzeichnet dass** die Kühlvorrichtung Folgendes umfasst:
einen Lufteinlass (32), als Frischlufteinlass bezeichnet, in dem Gehäuse (31), und
einen Luftauslass (33) des Gehäuses, der mit einem Ventilator (34) ausgestattet ist, der umfasst:
eine Luftbeschleunigungssäule (35), die das Gehäuse (31) und den Luftauslass (33) in Fluidverbindung bringt;
eine erste Zufuhr, Primärluftzufuhr (37) genannt, zu der Beschleunigungssäule (35), mit einer Temperatur und einem Druck, die höher sind als die Temperatur und der Druck der Frischluft, und
eine zweite Zufuhr zu der Beschleunigungssäule (35), Sekundärluftzufuhr (38) genannt, die in dem Gehäuse (31) vorliegt,
so dass die Primärluft die Sekundärluft in Richtung des Luftauslasses antreiben und beschleunigen kann, um eine Zwangsbelüftung der Luft in dem Gehäuse (31) zwischen dem Lufteinlass (32) und dem Luftauslass (33) zu erzeugen.

2. Kühlvorrichtung nach Anspruch 1, **dadurch gekennzeichnet, dass** die Primärluftzufuhr so eingerichtet ist, dass sie in Fluidverbindung mit einer Luftkammer (49) steht, die nicht sehr empfindlich gegenüber den Betriebsbedingungen des Ventils (20) ist, und die stromabwärts eines pneumatischen Reglers (40) des Ventils (20) angeordnet ist, um eine Zwangsbelüftung zu gewährleisten.

3. Kühlvorrichtung nach Anspruch 1, **dadurch gekennzeichnet, dass** die Primärluftzufuhr so eingerichtet ist, dass sie in Fluidverbindung mit einer Kammer (52) steht, die stromabwärts von einem Aktivierungselement (51) des Luftventils angeordnet ist, das vom Typ eines Aktivierungsmagneten ist, so dass die von der Luftbewegungsvorrichtung (34) bereitgestellte Zwangsbelüftung nur wirksam ist, wenn das Ventil (20) durch das Aktivierungselement (51) aktiviert wird.

4. Pneumatisches oder elektropneumatisches Ventil (20) mit einem Ventilkörper (21), der einen Lufteinlass (22), einen Luftauslass (23) und einen Luftzirkulationskanal (24) zwischen dem Lufteinlass (22) und dem Luftauslass (23) umfasst, einem Verschlusselement (25), das in dem Zirkulationskanal (24) zwischen mindestens einer offenen Stellung, in der Luft frei von dem Einlass (22) zu dem Auslass (23) zirkulieren kann, und einer geschlossenen Stellung, in der das Verschlusselement (25) den Durchgang von Luft von dem Einlass (22) zu dem Auslass (23) verhindert, beweglich angebracht ist, und Steuerelemente des Verschlusselements, **dadurch gekennzeichnet, dass** dieses zudem eine Vorrichtung (30) zum Kühlen der Steuerelemente gemäß einem der Ansprüche 1 bis 3 umfasst, so dass das Ventil in einer Umgebung, wie z.B. einer Flugzeugtriebwerksumgebung, angeordnet werden kann, die Temperaturen über den Nennbetriebstemperaturen der Steuerelemente aufweisen kann.

5. Ventil nach Anspruch 4, **dadurch gekennzeichnet, dass** die Primärluftzufuhr der Beschleunigungssäule (35) der Kühlvorrichtung (30) mit dem Luftzirkulationskanal (24) des Ventils stromaufwärts oder stromabwärts des Verschlusselements (25) verbunden ist, so dass die Primärluft die im Ventilkörper zirkulierende Luft ist.

6. Ventil nach Anspruch 4, **dadurch gekennzeichnet, dass** dieses zudem einen integrierten pneumatisches Regler (40) umfasst und dass die Primärluftzufuhr der Beschleunigungssäule (35) der Kühlvorrichtung (30) stromabwärts des Reglers (40) angeschlossen ist.

7. Ventil nach Anspruch 4, **dadurch gekennzeichnet, dass** dieses ein Element (51) zur Aktivierung des Ventils vom Typ eines Aktivierungsmagneten umfasst, und dass die Primärluftzufuhr der Beschleunigungssäule (35) der Kühlvorrichtung (30) stromabwärts des Aktivierungselements (51) angeschlossen ist, so dass die Zwangsbelüftung nur wirksam ist, wenn das Ventil durch das Aktivierungselement aktiviert wird.

8. Ventil nach einem der Ansprüche 5 bis 7, **dadurch gekennzeichnet, dass** der Lufteinlass (32) in dem Gehäuse (31) der Kühlvorrichtung mit einem Luftkanal verbunden ist, der mit Luft von einem Gebläse eines Triebwerks eines Flugzeugs versorgt wird.

9. Ventil nach einem der Ansprüche 5 bis 8, **dadurch gekennzeichnet, dass** die Sekundärversorgung der Kühlvorrichtung (30) mit einem Luftkanal verbunden ist, der mit Luft von einem Kompressor eines Triebwerks eines Flugzeugs versorgt wird.

10. Ventil nach einem der Ansprüche 5 bis 9, **dadurch gekennzeichnet, dass** die Steuerelemente (29) Elemente organischen Ursprungs umfassen, wie Beschichtungen, Lacke, Membranen und allgemein jedes Element, das eine temperaturabhängige Leistung aufweisen kann, die sich mit der Zeit verschlechtert.

## Claims

1. A device (30) for cooling heat-sensitive control members (29) of a pneumatic or electro-pneumatic valve (20) capable of being arranged in an environment subjected to temperatures above the nominal operating temperatures of these control members, the cooling device comprising:
- a containment casing (31) adapted to contain said control members (29) of said pneumatic valve,
**characterized in that** the cooling device also comprises:
- an air inlet (32), called the fresh air inlet, in said containment casing (31), and,
- an air outlet (33) of said containment casing, which outlet is equipped with an air mover (34) comprising:
o an air acceleration column (35) placing said containment casing (31) and said air outlet (33) in fluid communication;
o a first supply, called the primary supply (37), of air, called primary air, having a temperature and pressure greater than the temperature and pressure of the fresh air, to the acceleration column (35), and,
o a second supply, called the secondary supply (38), of air, called secondary air, present in said containment casing (31), to said acceleration column (35),
such that said primary air may drive and accelerate the secondary air toward said air outlet so as to produce forced ventilation of air in said containment casing (31) between said air inlet (32) and said air outlet (33).

2. The cooling device according to claim 1, **characterized in that** said primary supply is configured to be in fluid communication with an air chamber (49) arranged downstream of a pneumatic regulator (40) of said valve (20) so as to ensure forced ventilation which is not very sensitive to the operating conditions of said valve (20).

3. The cooling device according to claim 1, **characterized in that** said primary supply is configured to be in fluid communication with a chamber (52) arranged downstream of a member (51) for activating said air valve, of the activation solenoid type, so that said forced ventilation provided by said air mover (34) is only effective when said valve (20) is activated by said activation member (51).

4. A pneumatic or electro-pneumatic valve (20) comprising a valve body (21) comprising an air inlet (22), an air outlet (23) and an air circulation duct (24) between the air inlet (22) and the air outlet (23), a closure member (25) movably mounted in said circulation duct (24) between at least one open position in which air may freely circulate from said inlet (22) to said outlet (23), and a closed position in which the closure member (25) prevents the passage of air from the inlet (22) to said outlet (23), and control members of said closure member, **characterized in that** it further comprises a device (30) for cooling said control members according to one of claims 1 to 3 so that said valve may be arranged in an environment, such as an aircraft engine environment, capable of being subjected to temperatures above the nominal operating temperatures of said control members.

5. The valve according to claim 4, **characterized in that** said primary supply of said acceleration column (35) of said cooling device (30) is connected to said air circulation duct (24) of the valve, upstream or downstream of said closure member (25), so that said primary air is the air circulating in said valve body.

6. The valve according to claim 4, **characterized in that** it further comprises an integrated pneumatic regulating member (40) and **in that** said primary supply of said acceleration column (35) of said cooling device (30) is connected downstream of said regulating member (40).

7. The valve according to claim 4, **characterized in that** it comprises a member (51) for activating the valve, of the activation solenoid type, and **in that** said primary supply of said acceleration column (35) of said cooling device (30) is connected downstream of said activation member (51) so that said forced ventilation is only effective when said valve is activated by said activation member.

8. The valve according to one of claims 5 to 7, **characterized in that** said air inlet (32) in said containment casing (31) of said cooling device is connected to an air duct supplied with air from a fan of a propulsion engine of an aircraft.

9. The valve according to one of claims 5 to 8, **characterized in that** said secondary supply of said cooling device (30) is connected to an air duct supplied with air from a compressor of a propulsion engine of an aircraft.

10. The valve according to one of claims 5 to 9, **characterized in that** said control members (29) comprise members of organic origin such as coatings, varnishes, membranes and in general any member capable of having thermal performance that deteriorates over time.
